# EUROPÄISCHE PATENTSCHRIFT

(11) **EP 4 010 404 B1**
(45) Veröffentlichungstag und Bekanntmachung des Hinweises auf die Patenterteilung: **08.03.2023**
(21) Anmeldenummer: 19752504.1
(22) Anmeldetag: 09.08.2019
(51) Int. Cl.: C08G 77/04, C08G 77/18

(54) **VERNETZBARE ZUSAMMENSETZUNGEN AUF DER BASIS VON ORGANOSILICIUMVERBINDUNGEN**
CROSSLINKABLE COMPOSITIONS BASED ON ORGANOSILICON COMPOUNDS
COMPOSITIONS RÉTICULABLES À BASE DE COMPOSÉS D'ORGANOSILICIUM

(43) Veröffentlichungstag der Anmeldung: 15.06.2022
(73) Patentinhaber: Wacker Chemie AG, 81737 München (DE)
(72) Erfinder: SCHEIM, Uwe, 01640 Coswig (DE); PRASSE, Marko, 01612 Glaubitz (DE); SCHÖLEY, Peter, 01665 Diera-Zehren OT Kleinzadel (DE)
(74) Vertreter: Fritz, Helmut
(86) Internationale Anmeldenummer: PCT/EP2019/071462
(87) Internationale Veröffentlichungsnummer: WO 2021/028007

(56) Entgegenhaltungen:
- EP-A1- 1 580 224

## Beschreibung

Die Erfindung betrifft vernetzbare Zusammensetzungen auf der Basis von Organosiliciumverbindungen, Verfahren zu deren Herstellung sowie deren Verwendung.

Unter Ausschluss von Wasser lagerfähige, bei Zutritt von Wasser bei Raumtemperatur unter Abspaltung von Alkoholen zu Elastomeren aushärtende Einkomponenten-Dichtmassen sind bereits bekannt. Diese Produkte werden in großen Mengen z.B. in der Bauindustrie eingesetzt. Die Basis dieser Mischungen sind Polymere, die durch Silylgruppen terminiert sind, die reaktive Substituenten, wie OH-Gruppen oder hydrolysierbare Gruppen, wie z.B. Alkoxygruppen, tragen. Des Weiteren können diese Dichtmassen Füllstoffe, Weichmacher, Vernetzer, Katalysatoren sowie verschiedene Additive enthalten. Um als Dichtmassen verwendbar zu sein müssen die ausgehärteten Formkörper ein niedriges Modul aufweisen. Beispielsweise werden in DE-A1 102004014216 oligomere Siloxane beschrieben, die aus Methyltrimethoxysilan oder Methyltriethoxysilan hergestellt wurden. Es zeigte sich aber, dass die Effizient in Bezug auf Senkung des Moduls der damit hergestellten Mischungen gering ist. Das Dokument EP 1 580 224 A1, das ähnliche Zusammensetzungen betrifft, offenbart keine Verbindung der Formel (II).

Gegenstand der Erfindung sind vernetzbare Zusammensetzungen auf der Basis von Organosiliciumverbindungen enthaltend
(A) Organopolysiloxane der Formel

   (R⁷O)₃₋ₐSiR³ₐO(SiR⁴₂O)ₙSiR³ₐ(OR⁷)₃₋ₐ (I),

   wobei
   R⁴ gleich oder verschieden sein kann und einwertige, gegebenenfalls substituierte Kohlenwasserstoffreste bedeutet,
   R⁷ gleich oder verschieden sein kann und einwertige, gegebenenfalls substituierte Kohlenwasserstoffreste bedeutet,
   R³ gleich oder verschieden sein kann und einwertige, gegebenenfalls substituierte Kohlenwasserstoffreste bedeutet,
   a gleich oder verschieden sein kann und 0 oder 1, bevorzugt 1, ist und
   n eine ganze Zahl von 30 bis 2000 ist,
      und
(B) Siloxane der Formel (II) 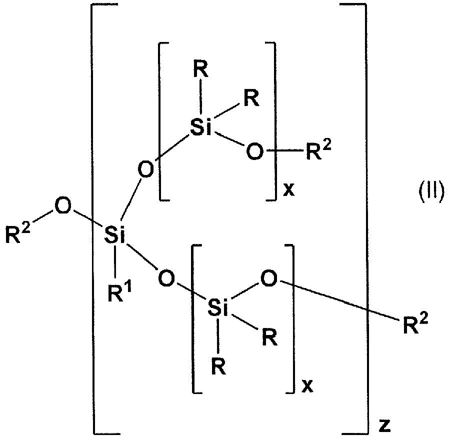 wobei
   R gleich oder verschieden sein kann und einwertige, gegebenenfalls substituierte Kohlenwasserstoffreste bedeutet,
   R¹ gleich oder verschieden sein kann und einwertige Kohlenwasserstoffreste mit 2 bis 16 Kohlenstoffatomen, Reste -CH₂-NR⁶R⁵ oder Reste -CH₂NR¹¹ bedeutet mit R⁵ gleich Kohlenwasserstoffreste mit 1 bis 12 Kohlenstoffatomen, R⁶ gleich Wasserstoffatom oder Rest R⁵, sowie R¹¹ gleich einem zweiwertigen Kohlenwasserstoffrest, der mit Heteroatomen unterbrochen sein kann,
   R² gleich oder verschieden sein kann und einwertige, gegebenenfalls substituierte Kohlenwasserstoffreste bedeutet,
   x gleich oder verschieden sein kann und 0 oder eine ganze Zahl von 1 bis 9 ist und
   z 1 oder 2 ist,
   mit der Maßgabe, dass die Summe aller x in Formel (II) größer 0 ist.

Beispiele für Reste R und R⁴ sind unabhängig voneinander Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, isoPentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Bevorzugt handelt es sich bei den Resten R und R⁴ unabhängig voneinander um einwertige Kohlenwasserstoffreste mit 1 bis 18 Kohlenstoffatomen, besonders bevorzugt um Methyl-, Vinyl- oder Phenylrest, insbesondere um den Methylrest.

Beispiele für Reste R¹ sind die für R angegebenen Kohlenwasserstoffreste mit 2 bis 16 Kohlenstoffatomen, -CH₂-NHCH₃, -CH₂NHCH₂CH₃, -CH₂NH(CH₂)₂CH₃, -CH₂NH(CH₂)₃CH₃, -CH₂NH-cycloC₆H₁₁, -CH₂-N(CH₃)₂, -CH₂N(CH₂CH₃)₂, -CH₂N((CH₂)₂CH₃)₂, -CH₂N((CH₂)₃CH₃)₂,-CH₂-N[CH₂-CH₂]₂O, -CH₂-N[CH₂-CH₂]₂NH und -CH₂-N[CH₂-CH₂]₂CH₂.

Bevorzugt handelt es sich bei Rest R¹ um aliphatische Kohlenwasserstoffreste mit 2 bis 16 Kohlenstoffatomen, die geradkettig, verzweigt oder cyclisch sein können, besonders bevorzugt um geradkettige, verzweigte oder cyclische, aliphatische, gesättigte Kohlenwasserstoffreste mit 2 bis 8 Kohlenwasserstoffatomen, insbesondere um den 2,2,4-Trimethylpentylrest.

Beispiele für Reste R² und R⁷ sind unabhängig voneinander die für R angegebenen einwertigen Reste.

Bevorzugt handelt es sich bei den Resten R² und R⁷ unabhängig voneinander um Alkylreste mit 1 bis 12 Kohlenstoffatomen, besonders bevorzugt um Methyl-, Ethyl-, n-Propyl- oder iso-Propylreste, insbesondere um den Methyl- oder den Ethylrest.

Beispiele für Reste R³ sind die für R angegebenen einwertigen Kohlenwasserstoffreste sowie mit Aminogruppen substituierte Kohlenwasserstoffreste.

Bevorzugt handelt es sich bei Rest R³ um einwertige, gegebenenfalls mit Aminogruppen substituierte Kohlenwasserstoffreste mit 1 bis 12 Kohlenstoffatomen, besonders bevorzugt um Methylrest, Ethylrest, Vinylrest, Phenylrest, Rest -CH₂-NR^{6'}R^{5'} oder den Rest -CH₂NR^{11'}, wobei R^{5'} Kohlenwasserstoffreste mit 1 bis 12 Kohlenstoffatomen bedeutet, R^{6'} Wasserstoffatom oder Rest R^{5'} bedeutet und R^{11'} zweiwertige Kohlenwasserstoffreste, die mit Heteroatomen unterbrochen sein können, bedeutet.

Besonders bevorzugt handelt es sich bei Rest R³ um Rest -CH₂-NR^{6'}R^{5'} oder Rest -CH₂NR^{11'} mit R^{5'}, R^{6'} und R^{11'} gleich der oben genannten Bedeutung, insbesondere um -CH₂-N[(CH₂)₂]₂O, -CH₂-N(Bu)₂ oder -CH₂-NH(cHex), wobei Bu n-Butylrest und cHex Cyclohexylrest bedeutet.

Beispiele für Reste R⁵ und R^{5'} sind unabhängig voneinander die für R angegebenen Kohlenwasserstoffreste.

Bevorzugt handelt es sich bei Rest R⁵ und R^{5'} unabhängig voneinander um den Methyl-, Ethyl-, iso-Propyl-, n-Propyl-, n-Butyl-, cyclo-Hexyl- oder Phenylrest, besonders bevorzugt um den n-Butylrest.

Beispiele für Kohlenwasserstoffreste R⁶ und R^{6'} sind unabhängig voneinander die für R angegebenen Kohlenwasserstoffreste.

Bevorzugt handelt es sich bei Rest R⁶ und R^{6'} unabhängig voneinander um Wasserstoffatom, den Methyl-, Ethyl-, iso-Propyl-, n-Propyl-, n-Butyl- oder cyclo-Hexylrest, besonders bevorzugt um den n-Butylrest.

Beispiele für zweiwertige Reste R¹¹ und R^{11'} sind unabhängig voneinander Alkylenreste, wie der Propan-1,3-diyl-, Butan-1,4-diyl-, Butan-1,3-diyl-, 2-Methylpropan-1,3-diyl-, Pentan-1,5-diyl-, Pentan-1,4-diyl-, 2-Methylbutan-1,4-diyl-, 2,2-Dimethylpropan-1,3-diyl-, Hexan-1,6-diyl-, Heptan-1,7-diyl-, Octan-1,8-diyl- und 2-Methylheptan-1,7-diyl- und 2,2,4-Trimethylpentan-1,5-diylrest; Alkenylenreste, wie der Propen-1,3-diylrest, sowie Reste -CH₂-CH₂-O-CH₂-CH₂- und -CH₂-CH₂-NH-CH₂-CH₂-.

Bevorzugt handelt es sich bei Rest R¹¹ und R^{11'} unabhängig voneinander um zweiwertige Kohlenwasserstoffreste mit 4 bis 6 Kohlenstoffatomen, die mit Heteroatomen, bevorzugt Sauerstoff - O- oder Stickstoff -NH-, unterbrochen sein können, besonders bevorzugt um -CH₂-CH₂-O-CH₂-CH₂- .

Bevorzugt handelt es sich bei den erfindungsgemäß eingesetzten Organopolysiloxanen (A) um

(MeO)₂Si(Ox)O(SiMe₂O)₃₀₋₂₀₀₀Si(Ox)(OMe)₂,

(MeO)₂Si(DBA)O(SiMe₂O)₃₀₋₂₀₀₀Si(DBA)(OMe)₂,

(MeO)₂Si(cHx)O(SiMe₂O)₃₀₋₂₀₀₀Si(cHx)(OMe)₂,

(MeO)₂Si(R³)O(SiMe₂O)₇₀₀Si(R³)(OMe)₂,

(EtO)₂Si(Ox)O(SiMe₂O)₃₀₋₂₀₀₀Si(Ox)(OEt)₂,

(EtO)₂Si(DBA)O(SiMe₂O)₃₀₋₂₀₀₀Si(DBA)(OEt)₂,

(EtO)₂Si(cHx)O(SiMe₂O)₃₀₋₂₀₀₀Si(cHx)(OEt)₂

oder

(EtO)₂Si(R³)O(SiMe₂O)₇₀₀Si(R³)(OEt)₂,

besonders bevorzugt um

(EtO)₂Si(Ox)O(SiMe₂O)₃₀₋₂₀₀₀Si(Ox)(OEt)₂,

(EtO)₂Si(DBA)O(SiMe₂O)₃₀₋₂₀₀₀Si(DBA)(OEt)₂

oder

(EtO)₂Si(cHx)O(SiMe₂O)₃₀₋₂₀₀₀Si(cHx)(OEt)₂,

insbesondere um

(EtO) ₂Si(Ox)O(SiMe₂O)₃₀₋₂₀₀₀Si(Ox)(OEt)₂,

worin Me gleich Methylrest, Et gleich Ethylrest, Ox gleich -CH₂-N[(CH₂)₂]₂O, DBA gleich -CH₂-N(nBu)₂, cHx gleich -CH₂-NH(cHex), Bu gleich n-Butylrest und cHex gleich Cyclohexylrest ist sowie R³ Me, Et, Vinylrest, Phenylrest, DBA, Ox oder cHx bedeutet, wobei die Reste R³ innerhalb der einzelnen Verbindungen eine identische Bedeutung haben.

Die erfindungsgemäß eingesetzten Organopolysiloxanen (A) haben eine Viskosität von bevorzugt 6000 bis 350000 mPas, besonders bevorzugt von 20000 bis 120000 mPas, jeweils bei 25°C.

Bei den Organopolysiloxanen (A) handelt es sich um handelsübliche Produkte bzw. können nach in der Siliciumchemie gängigen Methoden hergestellt werden.

Bevorzugt handelt es sich bei den erfindungsgemäß eingesetzten Siloxanen (B) um solche der Formel (II), wobei
R gleich Me, R² gleich Me oder Et, die Summe der x gleich 1-9 und z gleich 1 oder 2 ist sowie R¹ gleich oder verschieden sein kann und einwertige Kohlenwasserstoffreste mit 2 bis 16 Kohlenstoffatomen bedeutet,
besonders bevorzugt um solche der Formel (II), wobei R gleich Me, R² gleich Me, die Summe der x gleich 1-9 und z gleich 1 oder 2 ist sowie R¹ gleiche, einwertige Kohlenwasserstoffreste mit 2 bis 16 Kohlenstoffatomen bedeutet,
insbesondere um solche der Formel (II), wobei R gleich Me, R² gleich Me, die Summe der x gleich 1-9 und z gleich 1 oder 2 ist sowie R¹ 2,2,4-Trimethylpentylrest bedeutet mit Me gleich Methylrest und Et gleich Ethylrest.

Beispiele für Verbindungen der Formel (II) sind

EtO(SiMe₂O)₃SiR¹(OEt)₂,

(EtO(SiMe₂O)₃)₂SiR¹(OEt),

MeO(SiMe₂O)₃SiR¹(OMe)₂,

(MeO(SiMe₂O)₃)₂SiR¹OMe),

EtO(SiMe₂O)₃SiR¹(OEt)O(SiMe₂O)₃SiR¹(OEt)₂,

MeO(SiMe₂O)₃SiR¹(OMe)O(SiMe₂O)₃S1R¹(OMe)₂

EtO(SiMe₂O)ₓSi(iOct)(OEt)₂,

(EtO(SiMe₂O)ₓ)₂Si(iOct)(OEt),

MeO(SiMe₂O)ₓSi(iOct)(OMe)₂,

(MeO(SiMe₂O)ₓ)₂Si(iOct)(OMe),

EtO(SiMe₂O)ₓSi(iOct)(OEt)O(SiMe₂O)₃Si(iOct)(OEt)₂

oder

MeO(SiMe₂O)ₓSi(iOct)(OMe)O(SiMe₂O)₃Si(iOct)(OMe)₂

mit Me gleich Methylrest, Et gleich Ethylrest und iOct gleich 2,2,4-Trimethylpentylrest, x=1-9, und R¹ gleich geradkettige, verzweigte oder cyclische, aliphatische Kohlenwasserstoffreste mit 2 bis 8 Kohlenstoffatomen, wobei die Reste R¹ innerhalb der einzelnen Verbindungen eine identische Bedeutung haben.

Insbesondere handelt es sich bei den erfindungsgemäß eingesetzten Siloxanen (B) um

MeO(SiMe₂O)ₓSi(iOct)(OMe)₂,

(MeO(SiMe₂O)ₓ)₂Si(iOct)(OMe)

oder

MeO(SiMe₂O)ₓSi(iOct)(OMe)O(SiMe₂O)₃Si(iOct)(OMe)₂

mit Me gleich Methylrest und iOct gleich 2,2,4-Trimethylpentylrest und x = 1-9.

Die erfindungsgemäß eingesetzten Siloxane (B) haben eine Viskosität von bevorzugt 5 bis 15 mPas bei 25°C.

Bevorzugt haben die Siloxane (B) die mittlere Zusammensetzung [R¹(OMe)₂O_{1/2}]ₐ[R¹Si(OMe)O_{2/2}]_{b}[R¹SiO_{3/2}]_{c}[Me₂SiO_{2/2}]_{d}[Me₂Si(OMe)O_{1/2}]ₑ, wobei a= 0,05-0,15 b= 0,10-0,20, c= 0,00-0,10, d=0,40-0,65 und e= 0,10-0,30 ist mit a+b+c < d+e und a+b+c+d+e=1 mit Me gleich Methylrest und R¹ gleich der oben genannten Bedeutung.

Die Siloxane (B) können nach in der Siliciumchemie gängigen Methoden hergestellt werden, wie z.B. durch Äquilibrierung von Polydimethylsiloxanen mit Trialkoxysilanen unter basischer Katalyse.

Die erfindungsgemäßen Zusammensetzungen enthalten Komponente (B) in Mengen von bevorzugt 1 bis 20 Gewichtsteilen, besonders bevorzugt von 1 bis 10 Gewichtsteilen, insbesondere von 2 bis 6 Gewichtsteilen, jeweils bezogen auf 100 Gewichtsteile Komponente (A).

Ein weiterer Gegenstand der Erfindung sind Siloxane der Formel (II), wobei R gleich oder verschieden sein kann und einwertige, gegebenenfalls substituierte Kohlenwasserstoffreste bedeutet,
R¹ gleiche Reste -CH₂-NR⁶R⁵ oder Reste -CH₂NR¹¹ mit R⁵ gleich Kohlenwasserstoffreste mit 1 bis 12 Kohlenstoffatomen, R⁶ gleich Wasserstoffatom oder Rest R⁵, sowie R¹¹ gleich einem zweiwertigen Kohlenwasserstoffrest, der mit Heteroatomen unterbrochen sein kann, bedeutet,
R² gleich oder verschieden sein kann und einwertige, gegebenenfalls substituierte Kohlenwasserstoffreste bedeutet,
x gleich oder verschieden sein kann und 0 oder eine ganze Zahl von 1 bis 9 ist und
z 1 oder 2 ist,
mit der Maßgabe, dass die Summe aller x in Formel (II) größer 0 ist.

Die erfindungsgemäßen Zusammensetzungen können neben den Siloxanen (A) und (B) eine Komponente (C) bestehend aus Silanen der Formel

(R⁸O)_{4-b}SiR⁹_{b} (III)

und/oder deren Teilhydrolysaten
enthalten, wobei
b gleich 0, 1 oder 2, bevorzugt 0 oder 1, ist,
R⁸ gleich oder verschieden sein kann und einwertige, gegebenenfalls substituierte Kohlenwasserstoffreste bedeutet und
R⁹ einwertige, gegebenenfalls substituierte Kohlenwasserstoffreste bedeutet.

Bevorzugt handelt es sich bei Rest R⁸ um Alkylreste mit 1 bis 12 Kohlenstoffatomen, besonders bevorzugt um Methyl-, Ethyl-, n-Propyl- oder iso-Propylreste, insbesondere um den Methyl- oder den Ethylrest.

Bevorzugt handelt es sich bei Rest R⁹ um einwertige, gegebenenfalls mit Glycidoxy-, Ureido-, Methacryloxy- oder Aminogruppen substituierte Kohlenwasserstoffreste mit 1 bis 18 Kohlenstoffatomen, besonders bevorzugt um Alkylreste, den Vinyl- oder den Phenylrest, insbesondere um den Methylrest oder den 2,2,4-Trimethylpentylrest.

In einer bevorzugten Ausführungsform werden als Komponente (C) ganz oder zum Teil Silane und/oder deren Teilhydrolysate mit funktionellen Gruppen eingesetzt, wie beispielsweise solche mit Glycidoxypropyl-, Aminopropyl-, Aminoethylaminpropyl-, Ureidopropyl- oder Methacryloxypropylresten, insbesondere dann, wenn haftvermittelnde Eigenschaften erwünscht werden.

Bei den gegebenenfalls eingesetzten Teilhydrolysaten (C) kann es sich um Teilhomohydrolysate handeln, d.h. Teilhydrolysate von einer Art von Silanen der Formel (III), wie auch um Teilcohydrolysate, d.h. Teilhydrolysate von mindestens zwei verschiedenen Arten von Silanen der Formel (III).

Unter dem Begriff Teilhydrolysate sind im Sinne der Erfindung Produkte zu verstehen, die durch Hydrolyse und/oder Kondensation entstanden sind.

Handelt es sich bei der in den erfindungsgemäßen Massen eingesetzten Komponente (C) um Teilhydrolysate von Silanen der Formel (III), so sind solche mit bis zu 20 Siliciumatomen bevorzugt.

Beispiele für erfindungsgemäß gegebenenfalls eingesetzte Komponente (C) sind Methyltrimethoxysilan, Vinyltrimethoxysilan, Phenyltrimethoxysilan, 2,2,4-Trimethylpentyltrimethoxysilan, Methyltriethoxysilan, Vinyltriethoxysilan, Phenyltriethoxysilan, Tetraethoxysilan, 2,2,4-Trimethylpentyltriethoxysilan, (2,3,5,6-Tetrahydro-1,4-oxazin-4-yl)methyltriethoxysilan, N,N-Di-n-butylaminomethyltriethoxysilan, N-Cyclohexylamionomethyltriethoxysilan, (2,3,5,6-Tetrahydro-1,4-oxazin-4-yl)methyltrimethoxysilan N,N-Di-n-butylaminomethyltrimethoxysilan, N-Cyclohexylamionomethyltrimethoxysilan, wobei Methyltrimethoxysilan, Vinyltriethoxysilan, Tetraethoxysilan, 2,2,4-Trimethylpentyltrimethoxysilan, (2,3,5,6-Tetrahydro-1,4-oxazin-4-yl)methyltriethoxysilan bevorzugt sind.

Bei Komponente (C) handelt es sich um handelsübliche Produkte bzw. können nach in der Siliciumchemie gängigen Methoden hergestellt werden.

Falls die erfindungsgemäßen Zusammensetzungen Komponente (C) enthalten, handelt es sich um Mengen von bevorzugt 0,01 bis 5 Gewichtsteilen, besonders bevorzugt von 0,01 bis 2 Gewichtsteilen, insbesondere von 0,05 bis 2 Gewichtsteilen, jeweils bezogen auf 100 Gewichtsteile Komponente (A). Die erfindungsgemäßen Zusammensetzungen enthalten bevorzugt Komponente (C), wobei diese bevorzugt zumindest zum Teil Silane und/oder deren Teilhydrolysate mit funktionellen Gruppen enthält.

Zusätzlich zu den Komponenten (A), (B) und gegebenenfalls (C) können die erfindungsgemäßen Zusammensetzungen nun alle Stoffe enthalten, die auch bisher in durch Kondensationsreaktion vernetzbaren Massen eingesetzt worden sind, wie z.B.

Härtungsbeschleuniger (D), Weichmacher (E), Füllstoffe (F) und Additive (G).

Als Härtungsbeschleuniger (D) können alle Härtungsbeschleuniger, die auch bisher in durch Kondensationsreaktion vernetzbare Massen eingesetzt werden, verwendet werden. Beispiele für Härtungsbeschleuniger (D) sind Titanverbindungen, wie beispielsweise Tetrabutyl- oder Tetraisopropyltitanat, oder Titanchelate, wie Bis(ethylacetoacetato)diisobutoxytitanium, oder organische Zinnverbindungen, wie Di-n-butylzinndilaurat und Din-butylzinndiacetat, Di-n-butylzinnoxid, Dimethylzinndiacetat, Dimethylzinndilaurat, Dimethylzinndineodecanoate, Dimethylzinnoxid, Di-n-octylzinndiacetat, Di-n-octylzinndilaurat, Di-n-octylzinnoxid sowie Umsetzungsprodukte dieser Verbindungen mit Alkoxysilanen, wie, das Umsetzungsprodukt von Di-n-butylzinndiacetat mit Tetraethoxysilan, wobei Di-n-octylzinndiacetat, Din-octylzinndilaurat, Dioctylzinnoxid, Umsetzungsprodukte des Di-n-octylzinnoxids mit Tetraethoxysilan, Tetrabutyltitanat, Tetraisopropyltitanat oder Bis(ethylacetoacetato)diisobutoxytitanium bevorzugt sind.

Falls die erfindungsgemäßen Massen Härtungsbeschleuniger (D) enthalten, handelt es sich um Mengen von vorzugsweise 0,001 bis 20 Gewichtsteilen, besonders bevorzugt 0,001 bis 1 Gewichtteilen, jeweils bezogen auf 100 Gewichtsteile Bestandteil (A).

Beispiele für gegebenenfalls eingesetzte Weichmacher (E) sind bei Raumtemperatur flüssige, durch Trimethylsiloxygruppen endblockierte Dimethylpolysiloxane, insbesondere mit Viskositäten bei 25°C im Bereich zwischen 5 und 1000 mPas, sowie hochsiedende Kohlenwasserstoffe, wie zum Beispiel Paraffinöle oder Mineralöle bestehend aus naphthenischen und paraffinischen Einheiten.

Falls die erfindungsgemäßen Massen Komponente (E) enthalten, handelt es sich um Mengen von vorzugsweise 5 bis 30 Gewichtsteilen, bevorzugt 5 bis 25 Gewichtsteilen, jeweils bezogen auf 100 Gewichtsteile Siloxane (A). Bevorzugt enthalten die erfindungsgemäßen Zusammensetzungen keinen Weichmacher (E).

Bei den in den erfindungsgemäßen Massen gegebenenfalls eingesetzten Füllstoffen (F) kann es sich um beliebige, bisher bekannte Füllstoffe handeln.

Beispiele für gegebenenfalls eingesetzte Füllstoffe (F) sind nicht verstärkende Füllstoffe (F), also Füllstoffe mit einer BET-Oberfläche von bis zu 20 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 20 m²/g, wie gefällte Kreide und Ruß, wie Furnace- und Acetylenruß; Kieselsäure, wie pyrogen hergestellte Kieselsäure und gefällte Kieselsäure; faserförmige Füllstoffe, wie Kunststofffasern.

Bevorzugt handelt es sich bei den gegebenenfalls eingesetzten Füllstoffen (F) um Calciumcarbonat oder Kieselsäure, besonders bevorzugt um Kieselsäure oder ein Gemisch aus Kieselsäure und Calciumcarbonat.

Bevorzugte Calciumcarbonat-Typen (F) sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Falls die erfindungsgemäßen Massen Füllstoffe (F) enthalten, handelt es sich um Mengen von vorzugsweise 10 bis 150 Gewichtsteilen, besonders bevorzugt 10 bis 130 Gewichtsteilen, insbesondere 10 bis 100 Gewichtsteilen, jeweils bezogen auf 100 Gewichtsteile Organopolysiloxane (A). Die erfindungsgemäßen Massen enthalten bevorzugt Füllstoff (F).

Beispiele für Additive (G) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Biozide wie Fungizide, Bactericide und Acarizide, zellenerzeugende Mittel, z.B. Azodicarbonamid, Hitzestabilisatoren, Scavenger, wie Si-N enthaltende Silazane oder Silylamide, z.B. N,N'-Bis-trimethylsilyl-harnstoff oder Hexamethyldisilazan, Cokatalysatoren, wie Lewis- und Brönstedsäuren, z.B. Sulfonsäuren, Phosphorsäuren, Phoshorsäureester, Phosphonsäuren und Phosphonsäureester, Thixotropiermittel, wie beispielsweise einseitig oder beidseitig OH-endterminiertes Polyethylenglykol oder gehärtetes Rizinusöl, Mittel zur weiteren Regulierung des Moduls wie Polydimethylsiloxane mit einer OH-Endgruppe, sowie beliebige Siloxane, die unterschiedlich zu Komponenten (A), (B) und (C) sind.

Falls die erfindungsgemäßen Massen Additive (G) enthalten, handelt es sich um Mengen von vorzugsweise 0,1 bis 20 Gewichtsteilen, besonders bevorzugt 0,1 bis 15 Gewichtsteilen, insbesondere 0,1 bis 10 Gewichtsteilen, jeweils bezogen auf 100 Gewichtsteile Organopolysiloxane (A). Bevorzugt enthalten die erfindungsgemäßen Massen Komponente (G).

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bevorzugt handelt es sich bei den erfindungsgemäßen Zusammensetzungen um solche, die
(A) Organopolysiloxane der Formel (I),
(B) Siloxane der Formel (II),

gegebenenfalls (C) Silane der Formel (III) und/oder deren Teilhydrolysate,
gegebenenfalls (D) Härtungsbeschleuniger,
gegebenenfalls (E) Weichmacher,
gegebenenfalls (F) Füllstoffe und
gegebenenfalls (G) Additive
   enthalten.

Besonders bevorzugt handelt es sich bei den erfindungsgemäßen Zusammensetzungen um solche, die
(A) Organopolysiloxane der Formel (I),
(B) Siloxane der Formel (II),
(C) Silane der Formel (III) und/oder deren Teilhydrolysate,

gegebenenfalls (D) Härtungsbeschleuniger,
gegebenenfalls (E) Weichmacher,
gegebenenfalls (F) Füllstoffe und
gegebenenfalls (G) Additive
   enthalten.

Insbesondere handelt es sich bei den erfindungsgemäßen Zusammensetzungen um solche, die
(A) Organopolysiloxane der Formel (I),
(B) Siloxane der Formel (II),
(C) Silane der Formel (III) und/oder deren Teilhydrolysate,
(D) Härtungsbeschleuniger,

gegebenenfalls (E) Weichmacher,
(F) Füllstoffe und
gegebenenfalls (G) Additive
   enthalten.

In einer weiteren bevorzugten Ausführungsform handelt es sich bei den erfindungsgemäßen Zusammensetzungen um solche, die
(A) Organopolysiloxane der Formel (I),
(B) Siloxane der Formel (II),
(C) Silane der Formel (III) und/oder deren Teilhydrolysate,
(D) Härtungsbeschleuniger,
(F) Füllstoffe und

gegebenenfalls (G) Additive
enthalten und frei von (E) Weichmacher sind.

Die erfindungsgemäßen Massen enthalten außer den Komponenten (A) bis (G) bevorzugt keine weiteren Bestandteile.

Bei den erfindungsgemäßen Zusammensetzungen handelt es sich bevorzugt um zähflüssig bis pastöse Massen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Das erfindungsgemäße Vermischen findet bevorzugt unter weitestgehendem Ausschluss von Wasser statt, d.h. der Einsatz von Rohstoffen, welche einen Wassergehalt von vorzugsweise weniger als 10000 mg/kg, bevorzugt von weniger als 5000 mg/kg, insbesondere von weniger als 1000 mg/kg aufweisen. Während des Mischprozesses wird bevorzugt mit trockener Luft oder Schutzgas wie Stickstoff beschleiert, wobei das jeweilige Gas einen Feuchtegehalt von vorzugsweise weniger als 10000 µg/kg, bevorzugt von weniger als 1000 µg/kg, insbesondere von weniger als 500 µg/kg, aufweist. Die Pasten werden nach dem Herstellen in handelsübliche feuchtigkeitsdichte Gebinde gefüllt, wie Kartuschen, Schlauchbeutel, Eimer und Fässer.

In einer bevorzugten Verfahrensweise werden zunächst die Komponenten (A), (B), gegebenenfalls (C) und (E) miteinander vermischt, danach gegebenenfalls Füllstoffe (F) zugegeben und schließlich gegebenenfalls weitere Bestandteile (D) und (G) zugegeben, wobei die Temperatur beim Mischen 60°C nicht übersteigt.

Ein weiterer Gegenstand der Erfindung ist ein Verfahren zur Herstellung der erfindungsgemäßen Zusammensetzungen durch Vermischen der einzelnen Bestandteile.

Das erfindungsgemäße Verfahren kann kontinuierlich, diskontinuierlich oder semikontinuierlich nach bekannten Verfahren und unter Verwendung von bekannten Apparaturen erfolgen.

Die erfindungsgemäßen bzw. erfindungsgemäß hergestellten Zusammensetzungen sind unter Ausschluss von Feuchtigkeit lagerfähig und bei Zutritt von Feuchtigkeit vernetzbar.

Für die Vernetzung der erfindungsgemäßen Zusammensetzungen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Zusammensetzungen.

Die erfindungsgemäßen Formkörper haben eine Spannung bei 100% Dehnung von bevorzugt kleiner 0,4 MPa, gemessen an Prüfkörpern Typ 2 gemäß ISO 37.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser-und Luftfahrzeugen, oder als Klebstoffe oder Verkittungsmassen, z.B. im Fensterbau oder bei der Herstellung von Vitrinen, sowie beispielsweise zur Herstellung von Schutzüberzügen, einschließlich solcher für der ständigen Einwirkung von Süß- oder Meerwasser ausgesetzte Oberflächen oder das Gleiten verhindernde Überzüge oder von gummielastischen Formkörpern.

Die erfindungsgemäßen Massen haben den Vorteil, dass sie leicht herzustellen sind und sich durch eine sehr hohe Lagerstabilität auszeichnen.

Des Weiteren haben die erfindungsgemäßen Massen den Vorteil, dass sie eine sehr gute Handhabbarkeit bei der Anwendung zeigen und bei einer Vielzahl von Applikation ausgezeichnete Verarbeitungseigenschaften aufweisen.

Die erfindungsgemäßen vernetzbaren Zusammensetzungen haben den Vorteil, dass der Modul gezielt eingestellt werden kann.

Die erfindungsgemäßen vernetzbaren Massen haben den Vorteil, dass sie auf einer Vielzahl von Untergründen sehr gut haften.

Die erfindungsgemäßen vernetzbaren Massen haben den Vorteil, dass sie keine Randzonen-Verschmutzung der angrenzenden Substrate verursachen. Insbesondere sind sie hervorragend geeignet Natur- und Kunststeine verfugen zu können, ohne dass die Randzonen verunreinigt werden.

Die erfindungsgemäßen vernetzbaren Massen haben den Vorteil, dass sie hinsichtlich der eingesetzten Stoffe sehr wirtschaftlich sind.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Zugfestigkeit, Reißdehnung und die Spannung bei 100 % Dehnung und werden nach ISO 37 an Prüfkörperm des Typs 2 bestimmt.

Im Rahmen der vorliegenden Erfindung wird die dynamische Viskosität nach DIN 53019, sofern nicht anders angegeben, bei 25°C mittels eines Rotationsrheometers "Physica MCR 300" von der Firma Anton Paar gemessen. Dabei wird für größer als 200 mPa·s ein Kegel-Platte-Messsystem (Searle-System mit Messkegel CP 50-1) verwendet. Die Schergeschwindigkeit wird der Polymerviskosität angepasst: 5000 bis 9999 mPa·s bei 62 1/s; 10000 bis 12499 mPa·s bei 50 1/s; 12500 bis 15999 mPa·s bei 38,5 1/s; 16000 bis 19999 mPa·s bei 33 1/s; 20000 bis 24999 mPa·s bei 25 1/s; 25000 bis 29999 mPa·s bei 20 1/s; 30000 bis 39999 mPa·s bei 17 1/s; 40000 bis 59999 mPa·s bei 10 1/s; 60000 bis 149999 bei 5 1/s.

Nach Temperierung des Messsystems auf die Messtemperatur wird ein dreistufiges Messprogramm bestehend aus einer Einlaufphase, einer Vorscherung und Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit, bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 Sekunden durchgeführt, aus denen der Mittelwert bestimmt wird. Der Mittelwert entspricht der dynamischen Viskosität, die in mPa·s angegeben wird.

In den folgenden Beispielen B1-B3 wurden die Molekülzusammensetzungen mittels Kernresonanzspektroskopie bestimmt (zu Begrifflichkeiten siehe ASTM E 386: Hochauflösende magnetische Kernresonanzspektroskopie (NMR): Begriffe und Symbole), wobei der 29Si-Kern vermessen wurde.

Im Folgenden werden Abkürzungen benutzt:
Me für Methylrest,
Et für Ethylrest,
Bu für n-Butylrest und
iOct für 2,2,4-Trimethylpentylrest.

### Herstellung eines Oligomerengemischs B1

240 g (3,25 mol) eines α,ω-Bis(trimethylsiloxy)polydimethylsiloxans mit einer Viskosität von 1000 mPas, 234 g (1,0 mol) Trimethoxy(2,4,4-trimethylpentyl)silan (= iOctSi(OMe)₃), erhältlich bei der Wacker Chemie AG unter der Bezeichnung SILRES^{®} BS 1316 und 0,80 g einer Lösung von Natriumethylat (21%ig) in Ethanol werden vermischt und 4 Stunden auf 110°C erhitzt. Nach dem Abkühlen der Lösung wird die Mischung durch Zugabe von 1,60 g einer Lösung von Dimethyldichlorsilan (10%ig) in n-Heptan neutralisiert. Diese Mischung wurde bei reduziertem Druck von 50 mbar bei 120°C an einem Rotationsverdampfer entflüchtigt.

Die Zusammensetzung des Gemisches wurde mittels 29-Si-NMR Spektroskopie ermittelt. Das Gemisch enthielt 1,4 Gew.-% iOctSi(OMe)₃, 0,4 Gew.-% Me₂Si(OMe)₂ und 98,2 Gew.-% eines Oligomerengemisches der mittleren Zusammensetzung von [iOctSi(OMe)₂O_{1/2}]_{0,08}[iOctSi(OMe)O_{2/2}]_{0,15}[iOctSiO_{3/2}]_{0,05}[Me₂SiO_{2/2}]_{0,43}-[Me₂Si(OMe)O_{1/2}]_{0,29}.

Die mittels Gelpermeationschromatographie bestimmten Molekulargewichte betrugen 929 g/mol (Mw - Gewichtsmittel) und 635 (Mn - Zahlenmittel). Die Polydispersität (Mw/Mn) war 1,46.

### Herstellung eines Oligomerengemischs B2

Die Verfahrensweise zur Herstellung des Oligomerengemischs B1 wurde wiederholt mit der Abänderung, dass anstelle des Trimethoxy(2,4,4-trimethylpentyl)silans 178g n-Butyltrimethoxysilan eingesetzt wurden. Das Gemisch enthielt 0,7 Gew.-% n-BuSi(OMe)₃, 0,2 Gew.-% Me₂Si(OMe)₂ und 99,1 Gew.-% eines Oligomerengemisches der mittleren Zusammensetzung von [n-BuSi(OMe)₂O_{1/2}]_{0,08}[n-BuSi(OMe)O_{2/2}]_{0,15}[n-BuSiO_{3/2}]_{0,07} [Me₂SiO_{2/2}]_{0,46}[Me₂Si(OMe) O_{1/2}]_{0,24}.

### Herstellung eines Oligomerengemischs B3

Die Verfahrensweise zur Herstellung des Oligomerengemischs B1 wurde wiederholt mit der Abänderung, dass anstelle des Trimethoxy(2,4,4-trimethylpentyl)silans 346g n-Hexadecyltrimethoxysilan eingesetzt wurden. Das Gemisch enthielt 3,6 Gew.-% n-C₁₆H₃₃Si(OMe)₃, 0,5 Gew.-% Me₂Si(OMe)₂ und 95,9 Gew.-% eines Oligomerengemisches der mittleren Zusammensetzung von [n-C₁₆H₃₃Si (OMe) ₂O_{1/2}]_{0,14}[n-C₁₆H₃₃Si(OMe) O_{2/2}]_{0,13} [n-C₁₆H₃₃SiO_{3/2}]_{0,02} [Me₂SiO_{2/2}]_{0,61} [Me₂Si(OMe) O_{1/2}]_{0,10}.

### Herstellung eines Siloxanes A1

Eine Mischung aus 330 kg eines α,ω-Dihydroxypolydimethylsiloxans mit einer Viskosität von 80 000, mPas und 110 kg eines α,ω-Dihydroxypolydimethylsiloxans mit einer Viskosität von 20 000, mPas wurden mit 15,22 kg einer Lösung von 0,02 kg 1,5,7-Triazabicyclo[4.4.0]dec-5-en in 15,2 kg (2,3,5,6-Tetrahydro-1,4-oxazin-4-yl)methyltriethoxysilan für 5 min bei 200 min⁻¹ gerührt. Nach 5 min Reaktionszeit erhält man ein Gemisch aus 98,0 Gew.-% α,ω-Bis((2,3,5,6-Tetrahydro-1,4-oxazin-4-yl)methyldiethoxysilylpolydimethylsiloxan, 1,9 Gew.-% (2,3,5,6-Tetrahydro-1,4-oxazin-4-yl)methyltriethoxysilan und 0,1 Gew.-% Ethanol mit einer Viskosität von 52 000 mPas.

### Herstellung einer RTV1-Grundmischung GM1

455 kg des Siloxans A1 wurden mit 10,6 kg Tetraethoxysilanhydrolysat-Oligomer mit einem Gehalt an SiOz von 40% bei Totalhydrolyse und Kondensation, erhältlich bei der Wacker Chemie AG unter der Bezeichnung SILIKAT TES 40, 12,6 kg einer Mischung aus 6,3 kg Methyltriethoxysilan-Hydrolysat-Oligomeren mit durchschnittlich 10 Si-Atomen pro Molekül und 6,3 kg 3-Aminopropyltriethoxysilan zugegeben und für weitere 5 min bei 200 Umdrehungen pro Minute gerührt. Danach wurden 44 kg einer hydrophilen pyrogenen Kieselsäure mit einer Oberfläche von 150 m²/g, erhältlich bei der Wacker Chemie AG unter der Bezeichnung HDK^{®} V15A, zugegeben und zunächst bei 200 Umdrehungen pro Minute für weitere 5 min gerührt, bis die gesamt pyrogene Kieselsäure benetzt war. Danach wurden 10 min bei 600 min-1 gerührt bei vermindertem Druck von 200 mbar. Zum Schluss wurden 1,58 kg einer Lösung von 0,27 kg Dioctyl-zinnoxid in 1,31 kg einer Mischung aus 0,655 kg Methyltriethoxysilan-Hydrolysat-Oligomeren mit durchschnittlich 10 Si-Atomen pro Molekül und 0,655 kg 3-Aminopropyltriethoxysilan und 2 kg einer 50 Gew.-%igen Lösung von Octylphosphonsäure in Methyltrimethoxysilan zugegeben und weitere 5 min unter vermindertem Druck (200 mbar) gerührt. Diese Grundmischung GM1 dient als Basis für die Herstellung der unten folgenden erfindungsgemäßen Beispiele.

### Beispiele 1-9

Zu jeweils 250g der RTV1-Grundmischung GM1 wurden die in Tabelle 1 angegebenen Mengen des Oligomerengemischs B1 zugegeben und in einem Planetenmischer vom Typ Labmax eingemischt. Die jeweils so erhaltene Mischung wurde anschließend in feuchtigkeitsdichte Gebinde abgefüllt. 24h nach der Herstellung der Mischungen wurden aus diesen Mischungen 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt. Die mechanischen Eigenschaften, die an diesen Prüfkörpern gemessen wurden, können Tabelle 1 entnommen werden.

### Vergleichsbeispiel 1 (V1)

250g der RTV1-Grundmischung GM1 wurden ohne weiteren Zusatz in feuchtigkeitsdichte Gebinde abgefüllt. 24h nach der Herstellung der Grundmischung wurden 2 mm dicke Platten ausgezogen und daraus nach 7 Tagen Aushärtung bei 23°C und 50% relativer Luftfeuchte hantelförmige Prüfkörper des Typs 2 gemäß ISO 37, 6. Ausgabe 2017-11, hergestellt. Die mechanischen Eigenschaften, die an diesen Prüfkörpern gemessen wurden, können Tabelle 1 entnommen werden.

### Beispiel 10

Der Versuch gemäß Beispiel 1 wurde wiederholt mit der Abänderung, dass anstelle des Oligomerengemischs B1 5g des Oligomerengemisch B2 zugegeben wurden. Die mechanischen Eigenschaften, die an diesen Prüfkörpern gemessen wurden, können Tabelle 1 entnommen werden.

### Beispiel 11

Der Versuch gemäß Beispiel 1 wurde wiederholt mit der Abänderung, dass anstelle des Oligomerengemischs B1 5g des Oligomerengemisch B3 zugegeben werden. Die mechanischen Eigenschaften, die an diesen Prüfkörpern gemessen wurden, können Tabelle 1 entnommen werden.

**Tabelle 1**

| Beispiel | Oligomerengemisch | | Zugfestigkeit [MPa] | Reißdehnung [%] | Spannung bei 100% Dehnung [MPa] |
|---|---|---|---|---|---|
| 1 | B1 | 5,0g | 2,06 | 417 | 0,61 |
| 2 | B1 | 7,5g | 1,80 | 420 | 0,55 |
| 3 | B1 | 10,0g | 1,93 | 494 | 0,49 |
| 4 | B1 | 12,5g | 1,57 | 496 | 0,42 |
| 5 | B1 | 15,0g | 1,66 | 525 | 0,41 |
| 6 | B1 | 17,5g | 1,48 | 548 | 0,37 |
| 7 | B1 | 20,0g | 1,29 | 572 | 0,32 |
| 8 | B1 | 22,5g | 1,02 | 601 | 0,27 |
| 9 | B1 | 25,0g | 0,85 | 723 | 0,21 |
| V1 | | 0,0 | 1,90 | 355 | 0,68 |
| 10 | B2 | 5,0g | 2,48 | 513 | 0,58 |
| 11 | B3 | 5,0g | 2,28 | 451 | 0,62 |

## Patentansprüche

1. Vernetzbare Zusammensetzungen auf der Basis von Organosiliciumverbindungen enthaltend
(A) Organopolysiloxane der Formel
(R⁷O)₃₋ₐSiR³ₐO(SiR⁴₂O)ₙSiR³ₐ(OR⁷)₃₋ₐ (I),
wobei
R⁴ gleich oder verschieden sein kann und einwertige, gegebenenfalls substituierte Kohlenwasserstoffreste bedeutet,
R⁷ gleich oder verschieden sein kann und einwertige, gegebenenfalls substituierte Kohlenwasserstoffreste bedeutet,
R³ gleich oder verschieden sein kann und einwertige, gegebenenfalls substituierte Kohlenwasserstoffreste bedeutet,
a gleich oder verschieden sein kann und 0 oder 1 ist und
n eine ganze Zahl von 30 bis 2000 ist,
und
(B) Siloxane der Formel (II) 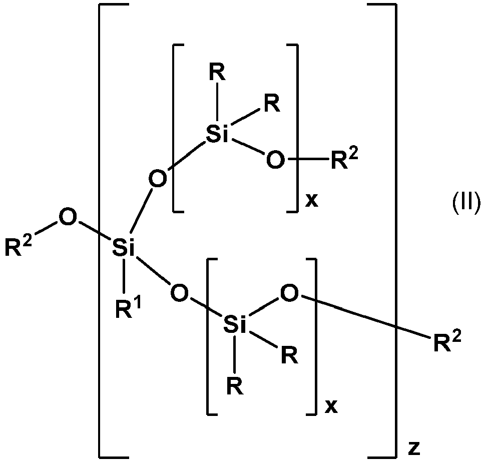 wobei
R gleich oder verschieden sein kann und einwertige, gegebenenfalls substituierte Kohlenwasserstoffreste bedeutet,
R¹ gleich oder verschieden sein kann und einwertige Kohlenwasserstoffreste mit 2 bis 16 Kohlenstoffatomen, Reste -CH₂-NR⁶R⁵ oder Reste -CH₂NR¹¹ bedeutet mit R⁵ gleich Kohlenwasserstoffreste mit 1 bis 12 Kohlenstoffatomen, R⁶ gleich Wasserstoffatom oder Rest R⁵, sowie R¹¹ gleich einem zweiwertigen Kohlenwasserstoffrest, der mit Heteroatomen unterbrochen sein kann,
R² gleich oder verschieden sein kann und einwertige, gegebenenfalls substituierte Kohlenwasserstoffreste bedeutet,
x gleich oder verschieden sein kann und 0 oder eine ganze Zahl von 1 bis 9 ist und
z 1 oder 2 ist,
mit der Maßgabe, dass die Summe aller x in Formel (II) größer 0 ist.

2. Zusammensetzungen gemäß Anspruch 1, **dadurch gekennzeichnet, dass** es sich bei Rest R¹ um aliphatische Kohlenwasserstoffreste mit 2 bis 16 Kohlenstoffatomen handelt.

3. Zusammensetzungen gemäß Anspruch 1 oder 2, **dadurch gekennzeichnet, dass** es sich bei Rest R³ um Rest -CH₂-NR^{6'}R^{5'} oder Rest -CH₂NR^{11'} handelt, wobei R^{5'} Kohlenwasserstoffreste mit 1 bis 12 Kohlenstoffatomen bedeutet, R^{6'} Wasserstoffatom oder Rest R^{5'} bedeutet und R^{11'} zweiwertige Kohlenwasserstoffreste, die mit Heteroatomen unterbrochen sein können, bedeutet.

4. Zusammensetzungen gemäß einem oder mehreren der Ansprüche 1 bis 3, **dadurch gekennzeichnet, dass** sie Komponente (B) in Mengen von 1 bis 20 Gewichtsteilen, bezogen auf 100 Gewichtsteile Komponente (A), enthalten.

5. Zusammensetzungen gemäß einem oder mehreren der Ansprüche 1 bis 4, **dadurch gekennzeichnet, dass** sie Komponente (C) bestehend aus Silanen der Formel
(R⁸O)_{4-b}SiR⁹_{b} (III)
und/oder deren Teilhydrolysaten enthalten, wobei b gleich 0, 1 oder 2 ist,
R⁸ gleich oder verschieden sein kann und einwertige, gegebenenfalls substituierte Kohlenwasserstoffreste bedeutet und
R⁹ einwertige, gegebenenfalls substituierte Kohlenwasserstoffreste bedeutet.

6. Zusammensetzungen gemäß einem oder mehreren der Ansprüche 1 bis 5, **dadurch gekennzeichnet, dass** es sich um solche handelt enthaltend
(A) Organopolysiloxane der Formel (I),
(B) Siloxane der Formel (II),
gegebenenfalls (C) Silane der Formel (III) und/oder deren Teilhydrolysate,
gegebenenfalls (D) Härtungsbeschleuniger,
gegebenenfalls (E) Weichmacher,
gegebenenfalls (F) Füllstoffe und
gegebenenfalls (G) Additive.

7. Zusammensetzungen gemäß einem oder mehreren der Ansprüche 1 bis 6, **dadurch gekennzeichnet, dass** es sich um solche handelt enthaltend
(A) Organopolysiloxane der Formel (I),
(B) Siloxane der Formel (II),
(C) Silane der Formel (III) und/oder deren Teilhydrolysate,
(D) Härtungsbeschleuniger,
(F) Füllstoffe und
gegebenenfalls (G) Additive
und frei von (E) Weichmacher sind.

8. Verfahren zur Herstellung der Zusammensetzungen gemäß einem oder mehreren der Ansprüche 1 bis 7 durch Vermischen der einzelnen Bestandteile.

9. Formkörper, hergestellt durch Vernetzung der Zusammensetzungen gemäß einem oder mehreren der Ansprüche 1 bis 7 oder hergestellt nach Anspruch 8.

10. Formkörper gemäß Anspruch 9, **dadurch gekennzeichnet, dass** sie eine Spannung bei 100% Dehnung , bestimmt nach ISO 37 an Prüfkörpern des Typs 2, von bevorzugt kleiner 0,4 MPa aufweisen.

11. Siloxane der Formel (II), wobei R gleich oder verschieden sein kann und einwertige, gegebenenfalls substituierte Kohlenwasserstoffreste bedeutet,
R¹ gleiche Reste -CH₂-NR⁶R⁵ oder Reste -CH₂NR¹¹ mit R⁵ gleich Kohlenwasserstoffreste mit 1 bis 12 Kohlenstoffatomen, R⁶ gleich Wasserstoffatom oder Rest R⁵, sowie R¹¹ gleich einem zweiwertigen Kohlenwasserstoffrest, der mit Heteroatomen unterbrochen sein kann, bedeutet,
R² gleich oder verschieden sein kann und einwertige, gegebenenfalls substituierte Kohlenwasserstoffreste bedeutet,
x gleich oder verschieden sein kann und 0 oder eine ganze Zahl von 1 bis 9 ist und
z 1 oder 2 ist,
mit der Maßgabe, dass die Summe aller x in Formel (II) größer 0 ist.

## Claims

1. Crosslinkable compositions based on organosilicon compounds comprising
(A) organopolysiloxanes of the formula
(R⁷O)₃₋ₐSiR³ₐO(SiR⁴₂O) ₙSiR³ₐ(OR⁷)₃₋ₐ (I),
where
R⁴ may be the same or different and are monovalent, optionally substituted hydrocarbon radicals,
R⁷ may be the same or different and are monovalent, optionally substituted hydrocarbon radicals,
R³ may be the same or different and are monovalent, optionally substituted hydrocarbon radicals,
a may be the same or different and is 0 or 1 and
n is an integer from 30 to 2000,
and
(B) siloxanes of the formula (II) 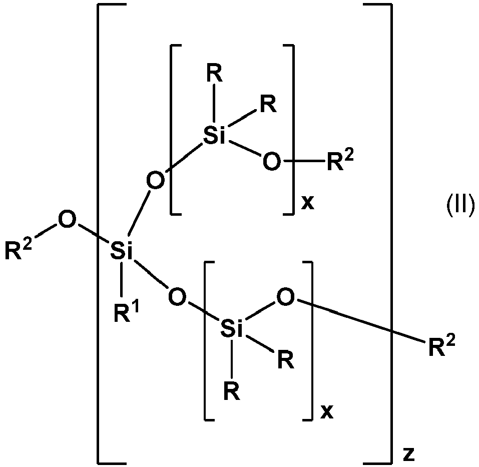 where
R may be the same or different and are monovalent, optionally substituted hydrocarbon radicals,
R¹ may be the same or different and are monovalent hydrocarbon radicals having 2 to 16 carbon atoms, -CH₂-NR⁶R⁵ radicals or -CH₂NR¹¹ radicals where R⁵ are hydrocarbon radicals having 1 to 12 carbon atoms, R⁶ is a hydrogen atom or radical R⁵, and R¹¹ is a divalent hydrocarbon radical which may be interrupted by heteroatoms,
R² may be the same or different and are monovalent, optionally substituted hydrocarbon radicals,
x may be the same or different and is 0 or an integer from 1 to 9 and
z is 1 or 2,
with the proviso that the sum of all x in formula (II) is greater than 0.

2. Compositions according to Claim 1, **characterized in that** the radical R¹ comprises aliphatic hydrocarbon radicals having 2 to 16 carbon atoms.

3. Compositions according to Claim 1 or 2, **characterized in that** the radical R³ is a -CH₂-NR^{6'}R^{5'} radical or a -CH₂NR^{11'} radical, where R^{5'} are hydrocarbon radicals having 1 to 12 carbon atoms, R^{6'} is a hydrogen atom or radical R^{5'}, and R^{11'} are divalent hydrocarbon radicals which may be interrupted by heteroatoms.

4. Compositions according to one or more of Claims 1 to 3, **characterized in that** said compositions comprise component (B) in amounts of 1 to 20 parts by weight, based on 100 parts by weight component (A).

5. Compositions according to one or more of Claims 1 to 4, **characterized in that** said compositions comprise component (C) consisting of silanes of the formula
(R⁸O)_{4-b}SiR⁹_{b} (III)
and/or partial hydrolyzates thereof, where b is 0, 1 or 2,
R⁸ may be the same or different and are monovalent, optionally substituted hydrocarbon radicals and
R⁹ are monovalent, optionally substituted hydrocarbon radicals.

6. Compositions according to one or more of Claims 1 to 5, **characterized in that** they are compositions comprising
(A) organopolysiloxanes of the formula (I),
(B) siloxanes of the formula (II),
optionally (C) silanes of the formula (III) and/or partial hydrolyzates thereof,
optionally (D) curing accelerators,
optionally (E) plasticizers,
optionally (F) fillers and
optionally (G) additives.

7. Compositions according to one or more of Claims 1 to 6, **characterized in that** they are compositions comprising
(A) organopolysiloxanes of the formula (I),
(B) siloxanes of the formula (II),
(C) silanes of the formula (III) and/or partial hydrolyzates thereof,
(D) curing accelerators,
(F) fillers and
optionally (G) additives
and are free from (E) plasticizers.

8. Process for producing the compositions according to one or more of Claims 1 to 7 by mixing the individual constituents.

9. Moldings produced by crosslinking the compositions according to one or more of Claims 1 to 7 or produced according to Claim 8.

10. Moldings according to Claim 9, **characterized in that** said moldings have a stress at 100% elongation, determined in accordance with ISO 37 on type 2 test specimens, of preferably less than 0.4 MPa.

11. Siloxanes of the formula (II), where R may be the same or different and are monovalent, optionally substituted hydrocarbon radicals,
R¹ are -CH₂-NR⁶R⁵ radicals or -CH₂NR¹¹ radicals where R⁵ are hydrocarbon radicals having 1 to 12 carbon atoms, R⁶ is a hydrogen atom or radical R⁵, and R¹¹ is a divalent hydrocarbon radical which may be interrupted by heteroatoms,
R² may be the same or different and are monovalent, optionally substituted hydrocarbon radicals,
x may be the same or different and is 0 or an integer from 1 to 9 and
z is 1 or 2,
with the proviso that the sum of all x in formula (II) is greater than 0.

## Revendications

1. Compositions réticulables à base de composés organosiliciés contenant
(A) des organopolysiloxanes de formule
(R⁷O)₃₋ₐSiR³ₐO(SiR⁴₂O)ₙSiR³ₐ(OR⁷)₃₋ₐ (I),
dans laquelle
R⁴ peut être identique ou différent et signifie des radicaux hydrocarbonés monovalents, le cas échéant substitués,
R⁷ peut être identique ou différent et signifie des radicaux hydrocarbonés monovalents, le cas échéant substitués,
R³ peut être identique ou différent et signifie des radicaux hydrocarbonés monovalents, le cas échéant substitués,
a peut être identique ou différent et représente 0 ou 1 et
n représente un nombre entier de 30 à 2000, et
(B) des siloxanes de formule (II) 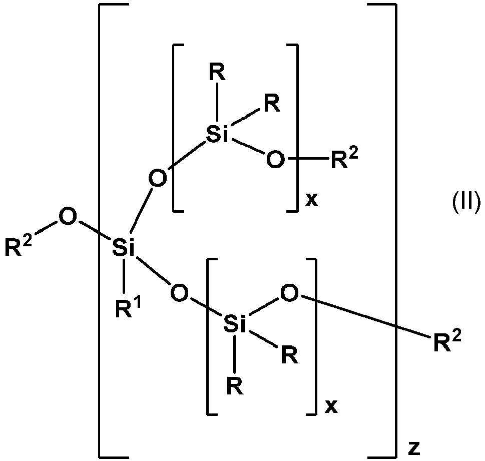 dans laquelle
R peut être identique ou différent et signifie des radicaux hydrocarbonés monovalents, le cas échéant substitués,
R¹ peut être identique ou différent et signifie des radicaux hydrocarbonés monovalents comprenant 2 à 16 atomes de carbone, des radicaux -CH₂-NR⁶R⁵ ou des radicaux -CH₂NR¹¹, R⁵ représentant des radicaux hydrocarbonés comprenant 1 à 12 atomes de carbone, R⁶ représentant un atome d'hydrogène ou le radical R⁵ et R¹¹ représentant un radical hydrocarboné divalent qui peut être interrompu par des hétéroatomes,
R² peut être identique ou différent et signifie des radicaux hydrocarbonés monovalents, le cas échéant substitués,
x peut être identique ou différent et représente 0 ou un nombre entier de 1 à 9 et
z représente 1 ou 2, à condition que la somme de tous les x dans la formule (II) soit supérieure à 0.

2. Compositions selon la revendication 1, **caractérisées en ce que** R¹ représente des radicaux hydrocarbonés aliphatiques comprenant 2 à 16 atomes de carbone.

3. Compositions selon la revendication 1 ou 2, **caractérisées en ce que** le radical R³ représente le radical -CH₂-NR^{6'}R^{5'} ou le radical -CH₂NR^{11'}, R^{5'} signifiant des radicaux hydrocarbonés comprenant 1 à 12 atomes de carbone, R^{6'} signifiant un atome d'hydrogène ou le radical R^{5'} et R^{11'} signifiant des radicaux hydrocarbonés divalents, qui peuvent être interrompus par des hétéroatomes.

4. Compositions selon l'une ou plusieurs des revendications 1 à 3, **caractérisées en ce qu'**elles contiennent le composant (B) en des quantités de 1 à 20 parties en poids, par rapport à 100 parties en poids de composant (A).

5. Compositions selon l'une ou plusieurs des revendications 1 à 4, **caractérisées en ce qu'**elles contiennent le composant (C) constitué par des silanes de formule
(R⁸O)_{4-b}SiR⁹_{b} (III)
et/ou leurs hydrolysats partiels, où
b représente 0, 1 ou 2,
R⁸ peut être identique ou différent et signifie des radicaux hydrocarbonés monovalents, le cas échéant substitués et
R⁹ signifie des radicaux hydrocarbonés monovalents, le cas échéant substitués.

6. Compositions selon l'une ou plusieurs des revendications 1 à 5, **caractérisées en ce qu'**il s'agit de compositions contenant
(A) des organopolysiloxanes de formule (I),
(B) des siloxanes de formule (II),
le cas échéant (C) des silanes de formule (III) et/ou leurs hydrolysats partiels,
le cas échéant (D) des accélérateurs du durcissement,
le cas échéant (E) des plastifiants,
le cas échéant (F) des charges et
le cas échéant (G) des additifs.

7. Compositions selon l'une ou plusieurs des revendications 1 à 6, **caractérisées en ce qu'**il s'agit de compositions contenant
(A) des organopolysiloxanes de formule (I),
(B) des siloxanes de formule (II),
(C) des silanes de formule (III) et/ou leurs hydrolysats partiels,
(D) des accélérateurs du durcissement,
(F) des charges et
le cas échéant (G) des additifs
et qui sont exemptes de (E) plastifiants.

8. Procédé pour la préparation des compositions selon l'une ou plusieurs des revendications 1 à 7, par mélange de différents constituants.

9. Corps façonnés, fabriqués par réticulation des compositions selon l'une ou plusieurs des revendications 1 à 7 ou préparées selon la revendication 8.

10. Corps façonnés selon la revendication 9, **caractérisés en ce qu'**ils présentent une contrainte à un allongement de 100%, déterminée selon la norme ISO 37 sur des éprouvettes de type 2, de préférence inférieure à 0,4 MPa.

11. Siloxanes de formule (II), R pouvant être identique ou différent et signifiant des radicaux hydrocarbonés monovalents, le cas échéant substitués,
R¹ signifiant des radicaux identiques -CH₂-NR⁶R⁵ ou des radicaux identiques -CH₂NR¹¹, R⁵ représentant des radicaux hydrocarbonés comprenant 1 à 12 atomes de carbone, R⁶ représentant un atome d'hydrogène ou le radical R⁵ et R¹¹ représentant un radical hydrocarboné divalent qui peut être interrompu par des hétéroatomes,
R² pouvant être identique ou différent et signifiant des radicaux hydrocarbonés monovalents, le cas échéant substitués,
x pouvant être identique ou différent et représentant 0 ou un nombre entier de 1 à 9 et
z représentant 1 ou 2, à condition que la somme de tous les x dans la formule (II) soit supérieure à 0.
